Europäisches Patentamt

(19) European Patent Office

Office européen des brevets

(11) Publication number : **0 648 801 A1**

## (12) EUROPEAN PATENT APPLICATION

(21) Application number : 94307348.6

(22) Date of filing : 06.10.94

(51) Int. Cl.$^6$ : **C08J 5/12,** C09J 5/06, C08F 255/02, C09J 151/06, B32B 7/12, // C08J5:12, C08L23:00, (C08F255/02, 220:06)

(30) Priority : **14.10.93 GB 9321251**

(43) Date of publication of application : **19.04.95 Bulletin 95/16**

(84) Designated Contracting States : **BE CH DE DK FR GB IT LI NL SE**

(71) Applicant : **DUPONT CANADA INC. Box 2200 Streetsville Mississauga, Ontario L5M 2H3 (CA)**

(72) Inventor : **Arthurs, Trevor Curtis 779 Grouse Crescent Kingston, Ontario, K7P 1A1 (CA)**

(74) Representative : **Harrison, David Christopher et al MEWBURN ELLIS York House 23 Kingsway London WC2B 6HP (GB)**

(54) Bonding substrate with solid adhesives.

(57)    A process for the bonding of substrates selected from polyvinyl chloride, cellulosic material, metals, polymers of melamine and polymers of phenol is disclosed. A layer of a thermoplastic polymer is interposed between two of the substrates and heated above its melting point. The thermoplastic polymer is a copolymer of ethylene, alkyl acrylate and carbon monoxide. In aspects, polyvinyl chloride to is bonded to cellulosic material at a temperature of less than 90°C to give structures that are useful at temperatures of greater than 100°C. The process is particularly useful in the manufacture of substrates for the manufacture of kitchen cabinets and other furniture.

EP 0 648 801 A1

The present invention relates to a process for the bonding of substrates with solid adhesives, including for example the bonding of polyvinyl chloride (PVC) to cellulosic material. In particular, the invention relates to lamination processes that do not use polyurethane adhesives.

Structures formed from, for example, polyvinyl chloride and cellulosic material are known. For instance, commercial processes are known for the lamination of polyvinyl chloride in sheet form to cellulosic material in the form of fibre board panels using water-based polyurethane adhesives. The resultant products may be used in the fabrication of a variety of products, including cabinets and other structures, for example kitchen cabinets. Such lamination using polyurethane adhesives provides a product with commercially-acceptable properties. However, the use of polyurethane adhesives in lamination processes represents an occupational health risk and major precautions must be taken during operation of the process in order to protect the personnel involved. Thus, it would be desirable to have alternate processes that do not use polyurethane adhesives. In addition, it would be advantageous to the trade to be able to apply the adhesive in one location e.g. onto the polyvinyl chloride, and be able to ship the coated polyvinyl chloride to another location for bonding to the cellulosic material.

Structures of polyvinyl chloride and cellulosic materials e.g. fibre board panels may have a number of property requirements, other than provision of adequate adhesion, for the intended end use at ambient temperatures. For instance, if the panels are to be used in the form of kitchen cabinets, the cabinets may be subjected to heat even though the cabinets are installed in a kitchen. Cabinets located adjacent to an oven may be subjected to heat significantly above ambient temperature during use of the oven, especially during cleaning cycles of self-cleaning ovens. A shear adhesion fail test has been developed for estimating the maximum temperature of use of an adhesive subject to shear stress; the test (ASTM D4498) involves determining the temperature at which the adhesive fails. In order to pass the test, kitchen cabinet structures are required to have a temperature of failure in the test of at least 100°C. One aspect of the invention relates to such product requirements.

With regard to the aspect discussed above, processes for lamination of polyvinyl chloride to fibre board panels normally operate at temperatures of less than 100°C. This imposes on the adhesive used in the lamination process that it be capable of being applied at a temperature of less than 100°C but also capable of withstanding temperatures in excess of 100°C in the shear adhesion fail test. For adhesives that crosslink after being applied, it is possible to apply the adhesive at a low temperature, crosslink the adhesive at the low temperature and obtain a product that is capable of withstanding 100°C in the shear adhesion fail test. However, this class of adhesives cannot be applied to polyvinyl chloride in one location and exhibit a sufficiently long shelf life to permit shipment to another location and storage for a period of time prior to use. For non-crosslinkable materials e.g. thermoplastic polymers, this requires that the polymer have a melting point of less than 100°C but be capable of exhibiting a temperature of greater than 100°C i.e. greater than its melting point, in the shear adhesion fail test.

US 5 219 665 of J.C. Chen et al. discloses the use of grafted copolymers of ethylene, n-butyl acrylate and carbon monoxide in laminations of ethylene/vinyl alcohol copolymers.

A process using an adhesive composition that is a solid adhesive and which is capable of replacing polyurethane adhesives in a number of applications has been found. In aspects, the process is capable of applying the adhesive composition at temperatures of less than 100°C to give a product having shear adhesion fail test temperatures of greater than 100°C as well as providing a long shelf-life of the adhesive composition between application to one substrate and lamination to another. In other aspects, particularly for end-uses other than e.g. kitchen cabinets, the product of the process is not required to meet the requirements of the shear adhesion fail test.

Accordingly, the present invention provides a process for the bonding of substrates selected from polyvinyl chloride, cellulosic material, metals, polymers of melamine and polymers of phenol, comprising:

(a) interposing a layer of a thermoplastic polymer between two of said substrates, the thermoplastic polymer being a copolymer of ethylene, alkyl acrylate and carbon monoxide;
(b) heating the thermoplastic polymer to a temperature above the melting point of said polymer; and
(c) cooling the resultant bonded structure of said substrates.

In preferred embodiments of the present invention, the substrates are selected from polyvinyl chloride, melamine/formaldehyde polymers, phenol/formaldehyde polymers, aluminum, steel and cellulosic substrates, especially in which the cellulosic substrate is selected from wood, fibreboard, paper, coated paper, paper coated with phenolic polymers.

In one aspect of the invention, the bonded structure exhibits a shear adhesion fail test temperature of at least 100°C.

In an embodiment of the invention, the thermoplastic polymer has been grafted with an ethylenically unsaturated carboxylic acid or anhydride, especially maleic anhydride.

In another embodiment, the thermoplastic polymer is applied to one of said substrates prior to contact with the second of said substrates, especially at least one hour before it is applied to the second substrate.

The process of the present invention relates to the bonding of substrates selected from polyvinyl chloride, cellulosic material, metals, polymers of melamine and polymers of phenol. In preferred embodiments, the substrates are selected from polyvinyl chloride, melamine/formaldehyde polymers, phenol/formaldehyde polymers, aluminum, steel and cellulosic substrates.

The polyvinyl chloride has a molecular weight that is suitable for forming layers of polyvinyl chloride. In particular, the polyvinyl chloride is capable of being formed into film or sheet form. The polyvinyl chloride will normally be an unplasticized polyvinyl chloride. Such polyvinyl chloride is commercially available.

The cellulosic material may be in the form of wood. Alternatively the cellulosic material may be in the form of fibre board panels, chip board, particle board, plywood and the like. The cellulosic material will normally be in the form of sheets or panels.

The polymers based on melamine and phenol include, for example, resins made from melamine and formaldehyde and resins made from phenol and formaldehyde, and novalac resins. Paper, including kraft paper, that has been treated or impregnated with resins made from melamine and formaldehyde may also be used e.g. kraft paper coated with phenol/formaldehyde resins and the like.

A variety of metals may be used, such as those used in the furniture and appliance industries. Particular examples are aluminum and steel.

The thermoplastic polymer is a copolymer of ethylene, alkyl acrylate and carbon monoxide. The alkyl group of the alkyl acrylate may be methyl, ethyl, propyl, butyl, including n-butyl and iso-butyl. Examples of such polymers are commercially available e.g. from E.I. du Pont de Nemours and Company of Wilmington, Delaware U.S.A. The polymers preferably contain at least 5% by weight of carbon monoxide and at least 15% by weight of the alkyl acrylate. The melt index, as measured by the procedure of ASTM D1238 (condition E), should be such that the thermoplastic polymer is capable of being formed into film or sheet. One example of a suitable polymer, as exemplified herein after, is the polymer available under the trademark Elvaloy® 441 from E.I. du Pont de Nemours and Company. Such polymer has a melt index of 8 dg/min.

In preferred embodiments, the thermoplastic polymer has been grafted with an ethylenically unsaturated carboxylic acid or anhydride. The grafting monomer is at least one monomer selected from ethylenically unsaturated carboxylic acids and ethylenically unsaturated carboxylic acid anhydrides, including, less preferably, derivatives of such acids, and mixtures thereof. Examples of the acids and anhydrides, which may be mono-, di- or polycarboxylic acids, are acrylic acid, methacrylic acid, maleic acid, fumaric acid, itaconic acid, crotonic acid, itaconic anhydride, maleic anhydride, and substituted maleic anhydride, e.g. dimethyl maleic anhydride or citraconic anhydride, nadic anhydride, nadic methyl anhydride, and tetrahydrophthalic anhydride, maleic anhydride being particularly preferred. Examples of the derivatives of the unsaturated acids are salts, amides, imides and esters e.g. mono- and disodium maleate, acrylamide, maleimide, glycidyl methacrylate and dimethyl fumarate. Techniques for the grafting of such monomers onto the polyolefin are known e.g. as described in U.S. Patent 4 612 155 of R.A. Zelonka and C.S. Wong, which issued September 16, 1986, and in published European patent application No. 0 369 604 of D.J. Mitchell, published May 23, 1990. The present invention will be particularly described herein with reference to maleic anhydride as the grafting monomer.

If the grafted polyolefin is used as is i.e. not in the form of a blend with another polymer, then the maleic anhydride content of the grafted polyolefin is preferably at least 0.3% by weight and especially in the range of about 0.05-0.8% by weight, and typically about 0.1-0.5% by weight. However, ungrafted polyolefin may be blended with grafted polyolefin, and the amount of grafted monomer on the grafted polyolefin may be up to about 5% by weight. It is known to use blends of grafted and ungrafted polyolefins to order to achieve a desired level of graft in a composition.

The thermoplastic polymer should have a melting point of less than 90°C, and in preferred embodiments less than 85°C. In particular embodiments, the melting point is less than 75°C.

In one aspect of the invention, the process is particularly directed to the lamination of polyvinyl chloride to wood. While the resultant products may be used in a variety of end-uses, one important end-use is in the fabrication of kitchen cabinets. However, other aspects of the invention utilize combinations of the substrates disclosed herein, for use in a variety of industries. Such industries often have particular test procedures and performance requirements e.g. tests other than the shear adhesion fail test. The process disclosed herein is capable of producing product that meets the requirements for many industries. The process is also capable of being operated to produce a coated substrate at one location for lamination to the second substrate at another location, and to produce a coated substrate that may be laminated to a second substrate hours or days after coating of the first substrate. This allows flexibility in the supply and manufacture of articles. In addition, the process has minimal occupational health hazards.

As used herein, the shear adhesion fail test is according to the procedure of ASTM D4498 "Heat-Fail Temperature in Shear of Hot-melt Adhesives", but revised by use of a 100g weight instead of a 450g weight in order to simulate a low shear stress environment.

The present invention is illustrated by the following examples.

EXAMPLE I

A series of thermoplastic polymers having a melting point of less than 76°C were selected. The thermoplastic polymers in film form were bonded to polyvinyl chloride and to wood. The polyvinyl chloride was an unplasticized polyvinyl chloride with a thickness of 0.45 mm. The cellulosic material was a medium density fibreboard. The thermoplastic polymer was bonded between the polyvinyl chloride and fibreboard by pressing in a platen press at 76°C for 60 seconds under a pressure of 35kPa.

The results obtained were as follows, only Polymers A and B being in accordance with the present invention:

TABLE I

| Polymer | Melt Index | Bond to PVC | Bond to Wood | SAFT* (°C) | Peel Strength (lb) |
|---------|-----------|-------------|--------------|------------|--------------------|
| A | 8 | good | good | 140 | 1.68 |
| B | 8 | good | good | 140 | 3.73 |
| C | 6 | good | fair | - | - |
| D | 150 | good | good | 100 | - |
| E | 6 | good | fair | - | - |
| F | 2.5 | good | none | - | - |
| G | 6.6 | good | none | - | - |
| H | 2 | good | none | - | - |

*Shear Adhesion Fail Test at 100g load
A= Elvaloy®441
B= 90% Elvaloy®441 + 10% Fusabond®175D
C= Elvax®4260 ethylene/vinyl acetate copolymer
D= Elvax®4320 ethylene/vinyl acetate copolymer
E= 90% Elvax®260 ethylene/vinyl acetate copolymer + 10% Fusabond®197D maleic anhydride grafted polyolefin
F= 90% Elvax®660 ethylene/vinyl acetate copolymer + 10% Fusabond®197D maleic anhydride grafted polyolefin
G= Bynel®1123
H= 90% Elvax®360 ethylene/vinyl acetate copolymer + 10% Fusabond®197D maleic anhydride grafted polyolefin
Elvaloy 441 is an ethylene/n-butylacrylate/carbon monoxide copolymer with a melt index of 8 dg/min;
Fusabond 175D is Elvaloy 441 grafted with maleic anhydride (nominally 1% by weight), with a melt index of 4-6 dg/min;
Fusabond 197D is Elvax 450 ethylene/vinyl acetate (18%) copolymer, melt index 8 dg/min, grafted with 0.8% by weight of maleic anhydride;
Elvax 4260 ethylene/vinyl acetate/acid terpolymer with 28% by weight of vinyl acetate, an acid no. of 4-8 and a melt index of 6 dg/min;
Elvax 4320 ethylene/vinyl acetate/acid terpolymer with 25% by weight of vinyl acetate, an acid no. of 4-8 and a melt index of 150 dg/min;
Elvax 260 ethylene/vinyl acetate (28%) copolymer with a melt index of 6 dg/min;
Elvax 360 ethylene/vinyl acetate (25%) copolymer with a melt index of 2 dg/min;
Elvax 660 ethylene/vinyl acetate (12%) copolymer with a melt index of 2.5 dg/min;
Bynel 1123 acid modified ethylene/vinyl acetate (26%) copolymer composition, containing 7.5% Surlyn® 8A-3935-1 ionomer, with a melt index of 6.6 dg/min;
Of the polymers listed above, Fusabond polymers are obtainable from DuPont Canada Inc. and the remaining

polymers are obtainable from E.I. du Pont de Nemours and Company.

Peel strength was measured by pressing a plaque of thermoplastic polymer of thickness of about 0.13 mm and an area of 1 sq.in between polyvinyl chloride and wood at 110°C, and pulling the sample apart in an Instron® tester at a jaw speed of 30 cm/min.

All of the thermoplastic polymers bonded to the polyvinyl chloride, but only the compositions based on Elvaloy 441 and Elvax 4320 bonded to the wood. In the shear adhesion fail test, the sample based on the Elvax polymer failed at 100°C whereas the samples based on the Elvaloy thermoplastic polymer failed at temperatures in excess of 100°C. The peel strength test showed that the addition of Fusabond®175D i.e. a grafted polymer, to the thermoplastic polymer had the effect of substantially increasing the peel strength obtained.

EXAMPLE II

The procedure of Example I was repeated using thermoplastic polymers having various levels of maleic anhydride as grafted monomer on the polymer. The peel strengths of the laminates of polyvinyl chloride and wood were measured.

The results obtained were as follows

TABLE II

| Composition | Maleic Anhydride (%) | Peel Strength (kg) |
|---|---|---|
| I | 0.0 | 1.68 |
| J | 0.1 | 3.73 |
| K | 0.2 | 4.55 |
| L | 1.0 | 5.14 |
| M | 0.95 | 5.68 |
| N | 0.9 | 5.14 |
| O | 0.8 | 4.14 |

```
I= 100% Elvaloy®441
J= 90% Elvaloy®441 + 10% Fusabond®175D
K= 80% Elvaloy®441 + 20% Fusabond®175D
L= 100% Fusabond®175D
M= 95% Fusabond®175D + 5% SAN
N= 90% Fusabond®175D + 10% SAN
O= 80% Fusabond®175D + 20% SAN
SAN = styrene/acrylonitrile polymer, as a blend
```

The results show that the peel strength improved with increasing amounts of maleic anhydride up to a level of 0.2% by weight but that the peel strength did not appear to improve significantly as the amount of maleic anhydride was increased further.

EXAMPLE III

Kraft paper that had been impregnated with phenol/formaldehyde polymer was laminated to a medium density fibreboard using an adhesive film, in a platen press at 100°C. The pressure used was 5 psi. The adhesive film used was a cast film of a blend of 95% by weight of a maleic anhydride-grafted ethylene/n-butyl/carbon monoxide copolymer with 5% by weight of a styrene/acrylonitrile polymer. The thickness of the adhesive film was either 0.064 mm or 0.127 mm.

Further details of the experimental procedure and of the results obtained are given in Table III.

## TABLE III

| Film Thickness (mm) | Press Time (min) | Lap Shear (MPa) | Dead Load Temp. (°C) | Plug Joint (N) |
|---|---|---|---|---|
| 0.064 | 1 | 1.0 | 69 | 370 |
| 0.064 | 5 | 1.2 | 76 | 609 |
| 0.127 | 1 | 1.3 | 69 | 340 |
| 0.127 | 5 | 2.8 | 76 | 500 |
| Control* | – | 0.3 | 45 | 310 |

\* The Control sample was a solvent-based neoprene adhesive that is commonly used in the furniture lamination industry. The sample was cold pressed.

Lap Shear was performed using a 1" x 7" (2.54 x 1.8 cm) sample cut from a larger section of the laminated structure. The sample was notched to give a one square inch bonded overlap. The sample was then tested in an Instron® at a cross-head speed of 0.2 in/min.

The Dead Load test is a modified shear adhesion fail temperature test where a 3400g load is hung from a piece of laminate having a 4 square inch bond area. In the test, the temperature of the oven that the samples are placed in is raised 10°C every 15 minutes. The Dead Load Temperature is the temperature at which failure of the bond occurs.

The plug joint test involves pulling a circular piece of the laminate away from the fibre board that it has been bonded to. The bonded area of the circular piece is one square inch. The plug joint strength is reported as the maximum load required to separate the circular piece of laminate from the fibre board in tension.

The results show that even with the thin film thickness, significant improvements were obtained in lap shear, dead load temperature and plug joint strength. Further improvements were obtained, particularly in plug joint strength, using the thicker film.

EXAMPLE IV

A melamine/formaldehyde polymer was laminated to medium density fibreboard using the procedure of Example III.

The results obtained are given in Table IV.

## TABLE IV

| Film Thickness (mm) | Time in Press (min) | Plug Joint (N) |
|---|---|---|
| 0.064 | 1 | 282 |
| 0.064 | 5 | 418 |
| 0.127 | 1 | 398 |
| 0.127 | 5 | 462 |
| Control* | – | 356 |

\* The Control was the same neoprene adhesive as used in Example III.

The results show the superior results obtained, especially with thicker films and the longer times in the press.

## Claims

1. A process for the bonding of substrates selected from polyvinyl chloride, cellulosic material, metals, polymers of melamine and polymers of phenol, comprising:

(a) interposing a layer of a thermoplastic polymer between two of said substrates, the thermoplastic polymer being a copolymer of ethylene, alkyl acrylate and carbon monoxide;
(b) heating the thermoplastic polymer to a temperature above the melting point of said polymer; and
(c) cooling the resultant bonded structure of said substrates.

2. The process of Claim 1 in which the substrates are selected from polyvinyl chloride, melamine/formaldehyde polymers, phenol/formaldehyde polymers, aluminum, steel and cellulosic substrates.

3. The process of Claim 2 in which the cellulosic substrate is selected from wood, fibreboard, paper, coated paper, paper coated with phenolic polymers.

4. The process of any one of Claims 1-3 in which the thermoplastic polymer has a melting point of less than 90°C.

5. The process of any one of Claims 1-5 in which the bonded structure exhibits a shear adhesion fail test temperature of at least 100°C.

6. The process of any one of Claims 1-5 in which the thermoplastic polymer has been grafted with an ethylenically unsaturated carboxylic acid or anhydride.

7. The process of any one of Claims 1-6 in which the polyvinyl chloride is unplasticized polyvinyl chloride.

8. The process of any one of Claims 1-7 in which the substrates are in the form of layers, and the structure is a laminate.

9. The process of any one of Claims 1-8 in which one of said substrates is cellulosic material and the bond strength obtained is greater than the cohesive strength of the cellulosic material.

10. The process of any one of Claims 1-9 in which the cellulosic material is wood.

11. The process of any one of Claims 1-9 in which the cellulosic material is fibreboard.

12. The process of any one of Claims 1-11 in which the thermoplastic polymer is applied to one of said substrates prior to contact with the second of said substrates.

13. The process of Claim 12 in which the thermoplastic polymer is applied to the first substrate at least one hour before it is applied to the second substrate.

14. The process of any one of Claims 1-13 in which the thermoplastic polymer has been grafted with maleic anhydride.

**European Patent Office**

# EUROPEAN SEARCH REPORT

Application Number

EP 94 30 7348

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 234 986 (MCBRIDE) | 1,2 | C08J5/12 |
| A | * examples r1-r4; table 1 * | 3-14 | C09J5/06 |
| | --- | | C08F255/02 |
| X | DATABASE WPI | 1-3,6,8, | C09J151/06 |
| | Week 9343, 24 September 1993 | 10,14 | B32B7/12 |
| | Derwent Publications Ltd., London, GB; | | //(C08J5/12, |
| | AN 93-339884 | | C08L23:00), |
| | 'Resin composition' | | (C08F255/02, |
| | & JP-A-5 247 318 (MITSUI DU PONT CHEMICAL) | | 220:06) |
| | * abstract * | | |
| A,P | & US-A-5 322 908 21 June 1994 | 4,5,7,9, 11-13 | |
| | --- | | |
| A | DATABASE WPI | 1-14 | |
| | Week 9325, 21 May 1993 | | |
| | Derwent Publications Ltd., London, GB; | | |
| | AN 93-200538 | | |
| | 'Thermostable graft-modified adhesives for PVC' | | |
| | & JP-A-5 125 131 (MITSUI DU PONT POLYCHEMICAL) | | TECHNICAL FIELDS SEARCHED (Int.Cl.6) |
| | * abstract * | | C08J |
| | --- | | C09J |
| A | EP-A-0 137 332 (DOW CHEMICAL COMPANY) | 1-14 | C08F |
| | * page 16, line 10 - page 18; examples 7-9; table III * | | |
| | * claims 1-11 * | | |
| | --- | | |
| X | WO-A-91 18043 (DU PONT DE NEMOURS AND COMPANY) | 1-4,8, 10-12 | |
| | * claims * | | |
| | ----- | | |

The present search report has been drawn up for all claims

| Place of search | Date of completion of the search | Examiner |
|---|---|---|
| THE HAGUE | 25 January 1995 | Oudot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)